# EUROPÄISCHE PATENTSCHRIFT

(11) **EP 3 083 882 B1**
(45) Veröffentlichungstag und Bekanntmachung des Hinweises auf die Patenterteilung: **07.02.2018**
(21) Anmeldenummer: 14825115.0
(22) Anmeldetag: 12.12.2014
(51) Int. Cl.: C09K 11/64, C09K 11/74, B42D 25/29, B42D 25/387

(54) **ZINKSULFIDISCHER LEUCHTSTOFF MIT PHOTO- UND ELEKTROLUMINESZENZVERHALTEN, VERFAHREN ZU DESSEN HERSTELLUNG SOWIE SICHERHEITSDOKUMENT, SICHERHEITSMERKMAL UND VERFAHREN ZU DESSEN DETEKTION**
ZINC SULPHIDE PHOSPHOR HAVING PHOTO- AND ELECTROLUMINESCENT PROPERTIES, PROCESS FOR PRODUCING SAME, AND SECURITY DOCUMENT, SECURITY FEATURE AND METHOD FOR DETECTING SAME
SUBSTANCE LUMINESCENTE À SULFURE DE ZINC PRÉSENTANT UN COMPORTEMENT PHOTO- ET ÉLECTROLUMINESCENT, PROCÉDÉ POUR LA PRODUCTION DE LADITE SUBSTANCE ET DOCUMENT DE SÉCURITÉ, CARACTÉRISTIQUE DE SÉCURITÉ ET PROCÉDÉ DE DÉTECTION DE LADITE CARACTÉRISTIQUE DE SÉCURITÉ

(30) Priorität: 19.12.2013 DE 102013114496
(43) Veröffentlichungstag der Anmeldung: 26.10.2016
(73) Patentinhaber: Bundesdruckerei GmbH, 10969 Berlin (DE); Leuchtstoffwerk Breitungen GmbH, 98597 Breitungen (DE)
(72) Erfinder: STARICK, Detlef, 10117 Berlin (DE); PAESCHKE, Manfred, 16352 Basdorf (DE); RÖSLER, Sven, 99817 Eisenach (DE); KUEN, Jakob, 12209 Berlin (DE); DEICHSEL, Andreas, 13503 Berlin (DE); KUNATH, Christian, 12203 Berlin (DE); VOH, Monika, 98597 Breitungen (DE)
(74) Vertreter: Engel, Christoph Klaus
(86) Internationale Anmeldenummer: PCT/EP2014/077491
(87) Internationale Veröffentlichungsnummer: WO 2015/091237

(56) Entgegenhaltungen:
- WO-A1-01/34723
- WO-A1-2010/106933
- CN-A- 1 563 268
- CN-A- 101 130 689
- DE-B3-102008 050 768
- KUNIO ICHINO ET AL: "Optical Properties and X-ray Absorption Fine Structure Analysis of ZnS:Cu,Cl Thin-Film Phosphors", JAPANESE JOURNAL OF APPLIED PHYSICS, Bd. 49, Nr. 8, 20. August 2010 (2010-08-20), Seite 082602, XP055171123, ISSN: 0021-4922, DOI: 10.1143/JJAP.49.082602

## Beschreibung

Die Erfindung betrifft einen pulverförmigen, zinksulfidischen Leuchtstoff, der als Elektroluminophor durch ein elektrisches Feld anregbar ist und darüber hinaus spezielle Lumineszenzeigenschaften aufweist. In besonderem Maße betrifft die Erfindung ein zinksulfidisches Elektrolumineszenzpigment, welches sich in charakteristischer Weise von den in konventionellen Dickschicht-Elektrolumineszenz-Anwendungen (AC Powder Electroluminescence, ACPEL) verwendeten Elektroluminophoren unterscheidet und welches aus diesem Grunde in vorteilhafter Weise als Sicherheitsmerkmal in Sicherheitsdokumenten eingesetzt werden kann. Darüber hinaus betrifft die Erfindung ein Verfahren zur Herstellung eines zinksulfidischen Leuchtstoffes sowie ein Sicherheitsmerkmal, ein Sicherheitsdokument und eine Methode zur Detektion und zur Verifizierung eines solchen Sicherheitsmerkmals.

Pulverförmige zinksulfidische Elektroluminophore und entsprechende ACPEL-Anwendungen sind seit langem bekannt. Die elektrolumineszenzfähigen ZnS-Leuchtstoffe sind zumeist mit Kupfer (Cu) und/oder Mangan (Mn) dotiert, wobei darüber hinaus weitere als Koaktivatoren fungierende ein- bzw. dreiwertige Ionen (beispielsweise die der Elemente Cl, Br, I und/oder Al) in das Grundgitter eingebaut werden können. Die Korngröße der synthetisierten Materialien liegt im Allgemeinen im µm-Bereich. Die Anwendung erfolgt zumeist im Form sogenannter Elektrolumineszenzfolien, bei denen die Leuchtstoffpartikel im Sinne einer Kondensatoranordnung zwischen zwei Elektroden und isolierenden Schichten angeordnet sind und beim Anlegen eines elektrischen Wechselfeldes von üblicherweise 110 V und 400 Hz Licht im blauen, grünen oder orangen Bereich des sichtbaren Spektrums emittieren. Anwendungsbeispiele für derartige Elektrolumineszenzfolien bzw. -lampen sind Display-, Hintergrundbeleuchtungen, Leucht- und Markierungselemente, wie sie in Flugzeugen und Kraftfahrzeugen, in Gebäuden oder zur Herstellung von Werbeinstallationen verwendet werden.

Die für die Herstellung bekannter Elektrolumineszenzfolien verwendeten zinksulfidischen Leuchtstoffteilchen werden zur Erhöhung der Lebensdauer der Folien zumeist mit dünnen wasserdampfsperrenden Schichten versehen. Diese auch als Mikroverkapselung bezeichnete Beschichtung kann beispielsweise unter Zuhilfenahme solcher Verfahren wie der Chemical Vapor Deposition erfolgen. Die die einzelnen Leuchtstoffpartikel vollständig umhüllenden Schichten können beispielsweise aus SiO₂, TiO₂, Al₂O₃ (vgl. US 5 156 885 A, US 5 220 243 A), aus den Oxynitriden der Elemente Al, B, Si, Ti (vgl. WO 00/022064 A1) oder aus AlN (vgl. EP 0 938 826 B1) bestehen.

Bekannt ist auch, mikroverkapselte oder nicht verkapselte, pulverförmige ZnS-EL-Pigmente als Sicherheitsmerkmale in Sicherheitsdokumenten und Wertdrucken, wie beispielsweise in Banknoten, Reisepässen, Personalausweisen, Führerscheinen usw. zu verwenden (vgl. EP 0 964 791 B1). Dabei werden die in diesen Fällen zum Zwecke des Fälschungsschutzes eingesetzten zinksulfidischen Elektroluminophore (vgl. EP 1 151 057 B1) zumeist mit Hilfe üblicher Drucktechnologien (beispielsweise Tiefdruck-, Offsetdruck- oder Siebdruckverfahren) auf bzw. in der Matrix der jeweiligen Sicherheitsdokumente, die sowohl aus Papier, Kunststoffen, laminierten Kunststoffen oder aber auch aus anderen geeigneten Materialien bestehen können, angeordnet, ohne dass dabei ein klassischer Kondensatoraufbau angestrebt oder realisiert wird. Zur Echtheitsverifizierung werden die solchermaßen applizierten Elektroluminophore vorzugsweise kontaktlos mit elektrischen Feldern angeregt, wobei wegen der spezifischen und unkonventionellen Anordnung der Elektrolumineszenzpigmente in der Matrix des Sicherheitsdokumentes im Allgemeinen vergleichsweise hochfrequente Hochspannungsfelder erforderlich sind, um eine sichere stationäre und vorteilhafterweise auch eine Hochgeschwindigkeitsdetektion der resultierenden Lumineszenzsignale zu gewährleisten (vgl. EP 1 059 619 B1, EP 1 149 364 B1 und DE 10 2008 047 636 A1).

Eine Erhöhung der an den Elektroluminophoren wirksamen lokalen Feldstärke der zur Anregung der Elektrolumineszenz aufgeprägten elektrischen Wechselfelder kann auch dadurch erreicht werden, dass zusätzlich zu den EL-Pigmenten und in unmittelbarer Nähe zu ihnen sogenannte Feldverdrängungselemente in den entsprechenden Sicherheitsmarkierungen der Sicherheits- und/oder Wertdokumente angeordnet werden (vgl. EP 1 631 461 B1, EP 1 748 903 B1). Bei den Feldverdrängungselementen handelt es sich um isolierte, elektrisch leitfähige Pigmente mit hohen Dielektrizitätskonstanten, wobei entweder metallische Partikel, die aus Eisen (Fe), Kupfer (Cu), Aluminium (Al) und/oder Silber (Ag) bestehen, oder bestimmte transparente, optisch variable Mehrschicht-Effektpigmente verwendet werden.

Elektrolumineszierende Sicherheitsmerkmale der beschriebenen Art besitzen ein sehr hohes Sicherheitsniveau und werden gemeinhin der Kategorie der sogenannten Level-3-Merkmale zugerechnet. Der Echtheitsnachweis entsprechender Sicherheitsdokumente erfordert spezielle Kenntnisse über die Funktionsweise des Merkmals und ist mit einem sehr hohen Aufwand und sehr hohen Anforderungen an die verwendete Detektionstechnik verbunden.

Werden, wie in der EP 1 748 903 B1 beschrieben, zur Erhöhung der wirksamen lokalen Stärke des anregenden elektrischen Feldes und somit der Signalstärke der resultierenden Elektrolumineszenz des Merkmals zusätzlich zu den EL-Leuchtstoffen sogenannte Feldverdrängungselemente in Form von elektrisch leitfähigen, optisch variablen Effektpigmenten eingesetzt, so kann das Merkmal neben der Level-3-Charakteristik auch eine entsprechende Level-1-Charakteristik aufweisen. Der optische Effekt dieser Pigmente, der in einem für den Betrachter wahrnehmbaren Farbwechsel unter verschiedenen Beleuchtungs- und Betrachtungswinkeln besteht, kann als ein zusätzliches Merkmal bei der Echtheitsverifikation herangezogen werden.

Mit unterschiedlichen Aktivatorionen dotierte ZnS-Leuchtstoffe können auch mit elektromagnetischer Strahlung (beispielsweise mit UV- oder Röntgenstrahlen) oder aber mit der Hilfe von Elektronenstrahlen zur Lumineszenz angeregt werden. Entsprechende Anwendungen als Leuchtstoffe für klassische Farbbildröhren oder als Nachleuchtpigmente haben eine lange Tradition. Allerdings zeigen die für eine effiziente Photo-, Kathodo- oder Röntgenlumineszenz optimierten zinksulfidischen Leuchtstoffe in aller Regel keine oder doch zumindest keine verwertbare Elektrolumineszenz. Gleiches gilt in umgekehrtem Sinne: sowohl die in konventionellen technischen Anwendungen als auch die in Sicherheits- und Wertdokumenten angewendeten EL-Pigmente sind durch elektromagnetische Strahlung und durch Elektronenstrahlen im Allgemeinen nicht oder nur äußerst schwach zur Lumineszenz anregbar, was auf die grundsätzlich unterschiedlichen Lumineszenzmechanismen der unterschiedlichen Lumineszenzarten sowie auf die für das Erreichen hoher Elektrolumineszenzausbeuten speziell ausgewählten Zusammensetzungen der EL-Pigmente und auf die speziellen Herstellungstechnologien zurückzuführen ist (vgl. Shionoya, S.; Yen, W. M.: "Phosphor Handbook", CRC Press, 1999, Seiten 581-621).

Die Herstellung zinksulfidischer Elektroluminophore erfolgt prinzipiell auf der Grundlage eines festkörperchemischen Mehrstufenprozesses. Aus dem Stand der Technik, u. a. aus der EP 1 151 057 B1 sind dafür die folgenden, nacheinander auszuführenden Schritte bekannt:
1. Intensives Mischen der pulverförmigen Ausgangsstoffe
2.Hochtemperaturglühprozess im Temperaturbereich zwischen 900°C und 1.300°C
3. Waschen des Glühgutes mit H₂O und/oder optional mit verdünnten Mineralsäuren, Nassvermahlung der Glühgutpartikel
4. Nachdotieren des Zwischenproduktes durch erneute Addition bestimmter Mengen an CuSO₄
5.Thermische Behandlung des getrockneten Materials bei Temperaturen zwischen 500°C und 900°C
6.Waschen des nach der Temperung erhaltenen Produktes mit H₂O, mineralischen Säuren wie HCl oder HNO₃ oder in Gegenwart von KCN zur Entfernung von oberflächlich ausgeschiedenem Cu₂S
7.Erneute Temperung des getrockneten Leuchtstoffpulvers bei 300°C bis 500°C

Der für die Bildung des aktivierten und kodotierten Leuchtstoffgrundgitters entscheidende Hochtemperaturprozess wird dabei regelmäßig in reduzierender Atmosphäre durchgeführt, d. h., dass die Glühung in Gegenwart eines Gasgemisches aus Stickstoff und Wasserstoff erfolgt, wobei der Wasserstoffanteil typischerweise bis zu 10 % betragen kann.

Die CN 1 563 268 A zeigt ein Verfahren zur Herstellung eines fluoreszierenden Pulvers. Gemäß diesem Verfahren werden Zinksulfid, Kupfernitrat, Gold, Bismutiodid, Kaliumiodid, Ammoniumiodid, Strontiumbromid, Schwefel, Ammoniumhydrogencarbonat und Aluminiumoxid als Ausgangsstoffe verwendet.

Die CN 101 130 689 A zeigt ein Verfahren zur Herstellung eines grün fluoreszierenden Pulvers. Gemäß diesem Verfahren wird eine Zinkmischung als Wirtsmaterial verwendet. Kupfernitrat wird als Aktivierungsmittel verwendet. Aluminiumfluorid wird als Koaktivierungsmittel verwendet. Chlorsäure und Bariumiodid werden als Flussmittel genutzt. Schwefel dient zur Erzeugung von Verbrennungsmaterial.

Aus der WO 01/34723 A1 ist Verfahren zur Herstellung eines feinkörnigen EL-Phosphors bekannt, bei welchem zunächst ein feinkörniges Zinksulfid durch Ausfällen von Zinksulfid aus den Lösungen geeigneter Zinksulfidsalze mit H₂S erfolgt. Die erhaltenen ZnS-Kristallite werden mit den zur Leuchtstoffformierung benötigten Aktivatoren und Koaktivatoren gemischt. Die erhaltene Mischung wird bei Temperaturen unter 1.000°C in Gegenwart von Schmelzmitteln unter Einsatz von fluoridischen und/oder bromidischen und/oder iodidischen Schmelzmitteln geglüht. Anschließend erfolgt eine Behandlung der erhaltenen pulverförmigen Elektroluminophore mit organischen und/oder anorganischen Säuren.

Die DE 10 2008 050 768 B3 lehrt ein Sicherheitsmerkmal auf Basis lumineszenzemittierender Stoffe, ein Wert- oder Sicherheitsdokument mit einem solchen Sicherheitsmerkmal und ein Verfahren zur Verifikation eines solchen Sicherheitsmerkmals. Das Sicherheitsmerkmal wird durch erste lumineszenzemittierende Stoffe sowie zweite lumineszenzemittierende Stoffe gebildet. Die erste Lumineszenz ist breitbandig und die zweite Lumineszenz ist schmalbandig. Der visuelle Farbeindruck des Sicherheitsmerkmals und die Gesamtintensität der Lumineszenz werden bei Anregung der emittierenden Stoffe zur Lumineszenz durch die spektral breitbandige erste Lumineszenz bestimmt.

Bei der Anwendung hochinnovativer Sicherheitsmerkmale mit Level-3-Status in Sicherheitsdokumenten, wie beispielsweise Banknoten, Reisepässen, Personalausweisen, Führerscheinen, ist es nachteilig, dass es immer dann nicht möglich ist, die Anwesenheit des jeweiligen Sicherheitsmerkmals mit Gewissheit nachzuweisen, wenn die hierzu erforderliche Laborausstattung bzw. die erforderliche Sensorik nicht vorhanden sind oder ihr Einsatz einen unvertretbar hohen Aufwand bedeuten würde. Dies kann in besonderem Maße auch auf elektrolumineszierende Sicherheitsmerkmale zutreffen. Weitere Hinderungsgründe für die Verwendung solcher Sicherheitsmerkmale können u. a. darin bestehen, dass beispielsweise Umweltvorschriften oder Sicherheitsverordnungen es nicht zulassen, die zur Echtheitsverifizierung erforderliche Anregung der EL-Pigmente mit hochfrequenten elektrischen Hochspannungswechselfeldern zu realisieren. Einschränkungen der beschriebenen Art können beispielsweise für die Verifizierung von Elektrolumineszenz-Merkmalen in Banknoten gelten, wenn der Echtheitsnachweis in dezentralen Sortieranlagen oder aber in Bankautomaten zur individuellen Bargeldentnahme oder zur Einzahlung von Bargeld durchgeführt werden soll. In derartigen Fällen wäre es von großem Nutzen, wenn das elektrolumineszierende Merkmal weitere von seiner Level-3-Charakteristik unabhängige Eigenschaften aufweisen würde, die ebenfalls zur Echtheitsverifikation herangezogen werden könnten, ohne das Funktionsprinzip des Level-3-Sicherheitsmerkmales preiszugeben. Vorzugsweise sollte der Echtheitsnachweis des Merkmals bei diesem alternativen Verfahren (Level-2-Status) unter Verwendung vergleichsweise einfach handhabbarer Detektionsmittel möglich sein.

Der Erfindung liegt ausgehend von dieser Zielstellung die Aufgabe zugrunde, einen veränderten zinksulfidischen Elektroluminophor bereitzustellen, der weiterhin seine Elektrolumineszenzeigenschaft aufweist aber darüber hinaus mindestens eine weitere als Sicherheitsmerkmal auswertbare Eigenschaft besitzt. Darüber hinaus soll die Erfindung ein entsprechendes Herstellungsverfahren sowie ein auf diesem Leuchtstoff beruhendes Sicherheitsmerkmal, ein Sicherheitsdokument mit einem solchen Sicherheitsmerkmal und eine Methode zur Detektion der zusätzlichen exklusiven Eigenschaften des Sicherheitsmerkmals in entsprechenden Sicherheitsdokumenten bereitstellen.
Die genannte Aufgabe wird gelöst durch einen zinksulfidischen Leuchtstoff gemäß dem beigefügten Anspruch 1. Die Aufgabe wird weiterhin gelöst durch ein Verfahren zum Herstellen eines zinksulfidischen Leuchtstoffes gemäß dem beigefügten nebengeordneten Anspruch 4 sowie durch ein durch dieses Verfahren herstellbaren Leuchtstoff gemäß dem beigefügten nebengeordneten Anspruch 5. Im Weiteren wird die Aufgabe gelöst durch ein Sicherheitsmerkmal gemäß dem beigefügten nebengeordneten Anspruch 6, durch ein Sicherheits- oder Wertdokument gemäß dem beigefügten nebengeordneten Anspruch 7 und durch ein Verfahren zur Detektion eines Sicherheitsmerkmals in einem Sicherheitsdokument gemäß dem beigefügten nebengeordneten Anspruch 8.
Der erfindungsgemäße, vorzugsweise pulverförmige, zinksulfidische Leuchtstoff zeigt zusätzlich zu seiner spezifischen Elektrolumineszenz eine intensive und damit durch herkömmliche Sensoren detektierbare Photolumineszenz, die außerdem durch einen charakteristischen Farbwechsel bei Variation der UV-Anregungsbedingungen gekennzeichnet ist.
Insbesondere weist der erfindungsgemäße zinksulfidische Leuchtstoff eine charakteristische blaue Elektrolumineszenz und eine ebenfalls blaue Emission bei Anregung im Wellenlängenbereich zwischen 345 nm und 370 nm auf, während er im Gegensatz dazu bei der Anregung mit einer kürzerwelligen UV-Strahlung im Wellenlängenbereich zwischen 310 nm und 335 nm grünes Licht aussendet. Der Leuchtstoff sendet also entweder blaue oder grüne Photolumineszenz aus. Dieser von der Elektrolumineszenz unabhängige Farbwechsel der UV-anregbaren Photolumineszenz kann als zusätzliches Echtheitskriterium bei der Anwendung des erfindungsgemäßen Leuchtstoffes in Sicherheitsmerkmalen ausgenutzt werden. Die beschriebene Exklusivität und Komplexität des Lumineszenzverhaltens ist an eine spezielle Leuchtstoffzusammensetzung gebunden, die nachfolgend angegeben wird.
Der erfindungsgemäße zinksulfidische Leuchtstoff weist die folgende allgemeine chemische Formel auf:

ZnS:Aₐ,M_{b},X_{c}

mit 0 < (a + b + c) < 0,12;
0,0001 < a < 0,008;
0,6 · a < b < 4 · a und
2 · b < c < 4 · b.
A steht für Cu, welches anteilig durch Ag und/oder Au ersetzt sein kann. Jedenfalls umfasst der Leuchtstoff grundsätzlich Cu als Aktivator. Bevorzugt steht A ausschließlich für Cu.
M steht für Al, welches anteilig durch ein oder mehrere Metalle ersetzt sein kann, welche ausgewählt sind aus der die Elemente Bi, Ga und In umfassenden Gruppe. Das Al und ggf. das Bi, Ga und/oder In treten als dreiwertige Kationen M³⁺ auf. Jedenfalls umfasst der Leuchtstoff grundsätzlich Al. Bevorzugt steht M ausschließlich für Al.

X steht für ein oder mehrere Halogenide, die als einwertige Anionen X⁻ auftreten und ausgewählt sind aus der die Elemente F, Cl, Br und I umfassenden Gruppe.

Die Ionen M³⁺ und X⁻ wirken als Koaktivatoren.

Die genauen Gitterpositionen, auf denen die Ionen von A, M und X eingebaut sind, lassen sich nicht bestimmen. Auch in der wissenschaftlichen Literatur besteht bei vergleichbaren Leuchtstoffen keine einheitliche Meinung über die Substitutionspositionen. Eine somit rein formal erstellte alternative Schreibweise für die allgemeine chemische Formel des erfindungsgemäßen Leuchtstoffes ist:

(Zn_{1-a-b-d}AₐM_{b}□_{d}) (S_{1-c-e}X_{c}□ₑ)

wobei das Formelsymbol □ für Fehlstellen und/oder Zwischengitterplätze steht und die Variablen d und e jeweils den Anteil der Fehlstellen und/oder der Zwischengitterplätze repräsentieren.

Eine alternative vereinfachte Schreibweise für die allgemeine chemische Formel des erfindungsgemäßen Leuchtstoffes ist:

ZnS:A,M,X

In dieser vereinfachten Schreibweise sind die Indizes a, b und c nicht angegeben.

Dabei ist es ein besonderes Charakteristikum des erfindungsgemäßen Leuchtstoffs, dass er neben dem als Aktivator fungierenden Kupfer (Cu) auch immer sowohl die als Koaktivatoren wirkendenden dreiwertige Kationen M³⁺ als auch gleichzeitig die ebenfalls als Koaktivatoren wirkenden einwertigen Anionen X⁻ enthält. Die gleichzeitige Anwesenheit von Kupfer und den beiden unterschiedlichen Arten von Koaktivatoren in dem Zinksulfid-Grundgitter ist eine Voraussetzung dafür, dass zumindest immer zwei unterschiedliche, aktivierbare Strahlungszentren entstehen, die möglicherweise als Ursache für die überraschend gefundenen speziellen Lumineszenzeigenschaften des erfindungsgemäßen Elektroluminophors angesehen werden können.

Der erfindungsgemäße Leuchtstoff kann geringfügige Mengen weiterer Elemente umfassen, sofern diese seine o. g. charakteristischen Eigenschaften nicht beeinträchtigen und die Emissionsintensitäten nicht in unvertretbarem Maße löschen.

Praktische Versuche haben gezeigt, dass trotz intensiven Auswaschens im Endprodukt vereinzelt Alkali- bzw. Erdalkalielemente analytisch nachweisbar sind, wenn diese in Form ihrer Halogenide dem Ansatzgemenge zugefügt worden waren. Es lässt sich bislang nicht eindeutig klären, ob diese Elemente in das Grundgitter eingebaut sind oder ob sie als nicht auswaschbare Einschlüsse im Leuchtstoff vorliegen. Ihre Anwesenheit führt aber nicht zu einer Veränderung der Eigenschaften des erfinderischen Leuchtstoffes. Somit stellt das Vorhandensein bzw. Fehlen von Alkali- bzw. Erdalkaliionen kein Merkmal dar, welches über die vorliegende Erfindung hinausgeht.

In einer bevorzugten Ausführungsform weist der erfindungsgemäße Leuchtstoff die folgende Zusammensetzung auf:

ZnS:Cuₐ,Al_{b},I_{c}

Bei dieser Ausführungsform ist A = Cu; M = Al und X = I.

Der erfindungsgemäße Leuchtstoff ist bevorzugt pulverförmig ausgebildet, wobei die mittlere Korngröße bevorzugt zwischen 2 µm und 50 µm; besonders bevorzugt zwischen 2 µm und 20 µm beträgt.

Einen weiteren Gegenstand der Erfindung bildet ein Verfahren zum Herstellen eines zinksulfidischen Leuchtstoffes, insbesondere des erfindungsgemäßen zinksulfidischen Leuchtstoffes.

Die erfindungsgemäße Synthese des zinksulfidischen EL-Leuchtstoffes, der zusätzlich zu seiner effizienten Elektrolumineszenz eine Photolumineszenz und einen sicher detektierbaren Farbwechsel der UV-anregbaren Photolumineszenz aufweist, erfordert spezielle Bedingungen. Dies kann nach dem aktuellen Erkenntnisstand u. a. damit erklärt werden, dass die Manifestierung und Wirksamkeit der mindestens zwei unterschiedlichen, aktivierbaren Strahlungszentren in der ZnS-Matrix nicht nur von der speziellen erfindungsgemäßen Leuchtstoffzusammensetzung sondern in starkem Maße auch von präparativen Faktoren beeinflusst wird.

Das Verfahren umfasst zunächst einen Schritt der Bereitstellung der Ausgangsverbindungen. Hauptbestandteil der Reaktionsmischung ist das Zinksulfid (ZnS), wobei dieser Basissubstanz gegebenenfalls zusätzlich bestimmte Mengen an Schwefel (S) hinzugefügt werden können. Es wird elementarer Schwefel als ein weiterer Ausgangsstoff verwendet und mit den ggf. weiteren Stoffen zu einer Mischung vermischt.

Ebenso wird eine Kupfer (Cu) enthaltende chemische Verbindung als Ausgangsstoff bereitgestellt. Das für die erfindungsgemäße Synthese des zinksulfidischen Elektroluminophors als Aktivator benötigte Kupfer (Cu) wird in aller Regel als Kupfersulfat (CuSO₄) in die Mischung der Ausgansstoffe eingeführt. Somit handelt es sich bei der das Kupfer umfassenden chemischen Verbindung bevorzugt um Kupfersulfat. Ergänzend können auch eine Ag enthaltende chemische Verbindung und/oder eine Au enthaltende chemische Verbindung verwendet werden. Bei der das Ag enthaltenden Verbindung handelt es sich bevorzugt um AgNO₃. Bei der das Au enthaltenden Verbindung handelt es sich bevorzugt um Na₃[AuCl₄].

Im Weiteren wird eine Al enthaltende chemische Verbindung bereitgestellt. Ergänzend können auch eine Bi enthaltende chemische Verbindung, eine Ga enthaltende chemische Verbindung und/oder eine In enthaltende chemische Verbindung als weiterer Ausgangsstoff bereitgestellt werden. Bei der das Aluminium (Al) enthaltenden chemischen Verbindung kann es sich beispielsweise um Aluminiumoxid (Al₂O₃) handeln, oder um entsprechende Präkursoren wie Aluminiumhydroxid (Al(OH)₃), Aluminiumsulfat (Al₂(SO₄)₃) oder Aluminiumnitrat (Al(NO₃)₃) oder um Aluminiumsulfid (Al₂S₃), aber auch um Aluminiumhalogenid (AlX₃ mit X = F, Cl, Br, I) oder um Aluminiumnitrid (AlN). Dies gilt entsprechend auch für die Bi enthaltende chemische Verbindung, für die Ga enthaltende chemische Verbindung und für die In enthaltende chemische Verbindung, die ergänzend verwendet werden können.

Weiterhin wird eine ein Halogenid X enthaltende chemische Verbindung bereitgestellt. Das Formelsymbol X steht für ein oder mehrere Elemente ausgewählt aus der die Elemente F, Cl, Br und I umfassenden Gruppe. Das Formelsymbol X steht bevorzugt für I. Das Iod (I) gelangt, so wie auch die anderen in der allgemeinen Formel beschriebenen Halogenide, zumeist in Form der entsprechenden Alkali- (beispielsweise LiI, NaI, KI), Erdalkali- (beispielsweise MgI₂, CaI₂, BaI₂) oder Ammoniumverbindung (NH₄I) oder aber auch als Bismutiodid (BiI₃) zum Einsatz. Bei der das Iod (I) enthaltenden chemischen Verbindung handelt es sich somit bevorzugt um LiI, NaI, KI, MgI₂, CaI₂, BaI₂, NH₄I und/oder BiI₃. Dies gilt entsprechend auch für X = F, X = Cl und X = Br.

Die das Al, Bi, Ga oder In enthaltende Verbindung und die das Halogenid X enthaltende Verbindung können identisch sein, z. B. als Aluminiumhalogenid (AlX₃) oder als Bismuthalogenid (BiX₃).

Einige der als Ausgangsstoffe zur Durchführung des Verfahrens bereitgestellten chemischen Verbindungen können bei der nachfolgenden thermischen Behandlung auch als Schmelzmittel wirken.

Die bereitgestellten chemischen Verbindungen sind ggf. zu vermahlen. Die in Pulverform vorliegenden chemischen Verbindungen sind zunächst miteinander zu einer Mischung zu vermischen.

Die Mischung wird dann bei Temperaturen zwischen 800°C und 1.200°C, ggf. auch bis zu 1.300°C geglüht, wodurch die in der Mischung befindlichen Ausgangsstoffe zu dem zinksulfidischen Leuchtstoff reagieren. Erfindungsgemäß erfolgt das Glühen der Mischung in Gegenwart von Aktivkohle, deren Anwesenheit eine wichtige Rolle bei der für die Herstellung des erfinderischen Leuchtstoffes erforderlichen Einstellung der lokalen Glühatmosphäre spielt. Der Hochtemperaturglühprozess erfolgt unter nur schwach reduzierenden Bedingungen (Glühen in einer N₂/H₂-Atmosphäre mit einem Wasserstoffanteil von höchstens 6 %), gelingt aber auch unter schwach oxidierenden Bedingungen (Glühen an stehender Luft). Gemäß dem Stand der Technik wird der Hochtemperaturglühprozess hingegen zumeist in reduzierender Atmosphäre, d. h., in Gegenwart eines Gasgemisches aus Stickstoff und Wasserstoff durchgeführt, wobei der Wasserstoffanteil typischerweise bis zu 10 % betragen kann. Wie bereits erwähnt, ist für die Erfindung stattdessen bedeutsam, dass eine Feinregulierung der lokalen Glühatmosphäre durch Anwesenheit von Aktivkohle möglich ist.

Das Glühen der Mischung erfolgt in einer schwach reduzierenden Atmosphäre aus Stickstoff N₂ und Wasserstoff H₂, mit 1 % bis 6 % Wasserstoff. Die schwach reduzierende Atmosphäre besteht besonders bevorzugt aus 5 % Wasserstoff und 95 % Stickstoff; alternativ bevorzugt aus 1,5 % Wasserstoff und 98,5 % Stickstoff.

Bei einer alternativen Ausführungsform erfolgt das Glühen unter stehender Luft.

Die Mischung befindet sich während des Glühprozesses bevorzugt in einem Glühtiegel, beispielsweise in einer Quarzgutschale oder in einem Aluminiumoxidschiffchen. Dabei wird eine Feinjustierung der lokalen Glühatmosphäre in dem einzelnen Glühtiegel dergestalt vorgenommen, dass innerhalb des bedeckten Glühtiegels und oberhalb der verdichteten Mischung Aktivkohle positioniert wird, beispielsweise durch einen kleineren mit Aktivkohle befüllten Graphittiegel. Auf diese Weise wird die Anwesenheit der Aktivkohle realisiert, wodurch es möglich wird, die Glühatmosphäre zu steuern und die frühzeitige Sublimation von Schmelzmittel- und/oder Koaktivatorzusätzen zu verhindern.

Die Masse der anwesenden Aktivkohle beträgt bevorzugt zwischen 0,0001 und 0,1 der Masse des Zinksulfids, besonders bevorzugt zwischen 0,0005 und 0,05 der Masse des Zinksulfids. Die Aktivkohle ist bevorzugt in einer Graphitschale angeordnet, welche oberhalb der verdichteten Mischung angeordnet wird.

Das Glühen der Mischung dauert bevorzugt mindestens zwei Stunden an. Es erfolgt bevorzugt bei Temperaturen zwischen 850°C und 1.200°C.

Der ausgebildete Leuchtstoff ist dann abzukühlen. Anschließend wird er gemäß einer Ausführungsform vermahlen, gewaschen, getrocknet und gesiebt. In diesem einfachen Fall steht der Leuchtstoff dann ohne weitere erforderliche Verfahrensschritte zur Verfügung.

Es hat sich überraschender Weise gezeigt, dass es für die Ausbildung der speziellen Eigenschaften des erfindungsgemäßen zinksulfidischen Leuchtstoffes von Vorteil sein kann, auf ein Nachdotieren des nach der Hochtemperaturglühung vorliegenden Glühgutes mit zusätzlichem Kupfer zu verzichten. Die gewünschten Lumineszenzeigenschaften des erfindungsgemäßen Leuchtstoffes lassen sich also mit einem drastisch reduzierten Verfahrensaufwand erreichen, nämlich ohne den im Stand der Technik erforderlichen Schritt der Nachdotierung bei zinksulfidischen Leuchtstoffen, die ausschließlich oder hauptsächlich Elektrolumineszenzeigenschaften aufweisen. Die Aufarbeitung des Glühgutes kann dann einfach durch schonende, deagglomerierende Nassvermahlung und Durchführung mehrerer Waschprozesse erfolgen. Folglich erfolgen bei diesen Ausführungsformen keine Behandlung mit einer verdünnten Mineralsäure, kein Nachdotieren des Zwischenproduktes mit Cu und auch keine erneute Behandlung mit einer verdünnten Säure und kein erneutes Tempern.

Der nach dem Hochtemperaturglühprozess erhaltende Leuchtstoff stellt zunächst ein Zwischenprodukt dar. Dieses Zwischenprodukt wird vor den weiteren Schritten abgekühlt und mit H₂O gewaschen. Weiterhin erfolgt ein Desagglomerieren des Zwischenproduktes unter Einsatz von Keramikkugeln und unter Zusatz eines Mahlhilfsmittels, wie Cholinbase, Pyrophosphatlösung oder Kaliwasserglaslösung. Schließlich erfolgt eine Behandlung mit verdünnter Mineralsäure, wodurch insbesondere die Oberflächen der Pulverkörner des Zwischenproduktes modifiziert werden. Die Mineralsäure ist bevorzugt durch Salzsäure gebildet. Bei diesen Ausführungsformen erfolgt ein Nachdotieren des Zwischenproduktes mit Cu, wodurch der herzustellende Leuchtstoff ausgebildet wird. Das Nachdotieren erfolgt dadurch, dass Cu in Form einer Cu enthaltende chemische Verbindung, wie CuSO₄ dem Zwischenprodukt zugeführt wird.

Der nachdotierte Leuchtstoff wird getempert, bei einer Temperatur zwischen 200°C und 600°C, besonders bevorzugt zwischen 300°C und 500°C. Das Tempern dauert bevorzugt mindestens eine Stunde.

Der nachdotierte Leuchtstoff wird nochmals als Zwischenprodukt angesehen und wird mit einer verdünnten Mineralsäure behandelt, nachdem er getempert wurde. Die verdünnte Säure ist bevorzugt durch verdünnte Salpetersäure gebildet. Nach dem Behandeln mit der verdünnten Säure wird dieses Zwischenprodukt erneut gewaschen, getrocknet und getempert. Das erneute Tempern erfolgt bei einer Temperatur zwischen 200°C und 500°C und führt nach dem Abkühlen zu dem abgewandelten zinksulfidischen Leuchtstoff.

Die Einstellung der präparativen Konditionen ist für die erfinderische Herstellung des zinksulfidischen Leuchtstoffes bedeutsam. Ausgehend von den hier offenbarten Herstellungsschritten können ggf. optimierte Synthesebedingungen trotz der Komplexität der charakteristischen Leuchtstoffeigenschaften des Elektroluminophors und trotz des unterschiedlichen Einflusses der präparativen Faktoren experimentell leicht aufgefunden werden. Gegebenenfalls sind dazu nur einige wenige unter Laborbedingungen durchzuführende Versuche erforderlich. Andererseits ist in diesem Zusammenhang ausdrücklich festzustellen, dass die erfindungsgemäße Synthese des Leuchtstoffes um weitere an sich bekannte Verfahrensschritte ergänzt werden kann.

Bei den Untersuchungen zum Auffinden geeigneter Herstellungsbedingungen für den herzustellenden Leuchtstoff hat sich zudem gezeigt, dass die vorteilhaften Eigenschaften dieser Elektroluminophore unabhängig von der im Bereich zwischen 800°C und 1.300°C gewählten Temperatur für den Hochtemperaturglühprozess eingestellt werden können. Das bedeutet aber auch, dass sie unabhängig von der mehrheitlich kubischen und/oder hexagonalen Kristallstruktur der ZnS-Matrix ausgebildet werden. Nach Literaturangaben kristallisiert ZnS unterhalb von 1.020°C ausschließlich im kubischen Kristallsystem, während bei höheren Temperaturen hexagonale oder aber, abhängig von den Bedingungen des Abkühlregimes, Mischungen aus hexagonalen und kubischen Kristallen oder Kristalliten erhalten werden.

Der in der beschriebenen Weise hergestellte Leuchtstoff weist im Allgemeinen gut deagglomerierte Teilchen mit mittleren Korngrößen zwischen etwa 2 µm und etwa 20 µm auf. Die Korngrößenverteilungen können über die Präparationsbedingungen gesteuert und eingestellt werden. Die mittleren Korngrößen des erfindungsgemäßen Elektroluminophors sind nicht auf den beispielhaft genannten Bereich beschränkt.

Der erfindungsgemäße Leuchtstoff ist bevorzugt durch das erfindungsgemäße Verfahren zu seiner Herstellung sowie durch die beschriebene spezifische Leuchtstoffzusammensetzung gekennzeichnet.

Ein weiterer Gegenstand der Erfindung ist durch einen zinksulfidischen Leuchtstoff gebildet, der durch das erfindungsgemäße Verfahren herstellbar ist. Dieser zinksulfidische Leuchtstoff ist bevorzugt durch bevorzugte Ausführungsformen des erfindungsgemäßen Verfahrens herstellbar. Dieser zinksulfidische Leuchtstoff weist insbesondere die oben beschriebenen Merkmale des erfindungsgemäßen Leuchtstoffes auf. Bevorzugt weist dieser zinksulfidische Leuchtstoff das oben beschriebene Merkmal auf, dass Cu einen Aktivator bildet und dass M und X Koaktivatoren bilden, wobei durch Cu sowie durch M und X zwei unterschiedliche, aktivierbare Strahlungszentren im zinksulfidischen Leuchtstoff bedingt sind.

Das erfindungsgemäße Sicherheitsmerkmal umfasst eine oder mehrere Ausführungsformen des erfindungsgemäßen zinksulfidischen Leuchtstoffs.

Bei dem erfindungsgemäßen Sicherheits- und/oder Wertdokument kann es sich beispielsweise um eine Banknote oder um einen Reisepass, einen Personalausweis, einen Führerschein oder um eine Briefmarke handeln. Es weist ein Sicherheitsmerkmal auf, welches eine oder mehrere Ausführungsformen des erfindungsgemäßen zinksulfidischen Leuchtstoffs umfasst. Das Sicherheitsmerkmal kann auf unterschiedliche Weise auf oder in das Sicherheitsdokument auf- bzw. eingebracht sein. Bevorzugt ist das Sicherheitsmerkmal mit Hilfe geeigneter Drucktechnologien, wie beispielsweise mit einem Tiefdruck-, Offsetdruck- oder Siebdruckverfahren in das und/oder auf das Sicherheitsdokument appliziert.

Im erfindungsgemäßen Sicherheits- bzw. Wertdokument sind in bevorzugter Weise neben dem erfindungsgemäßen zinksulfidischen Leuchtstoff weiterhin zusätzlich Feldverdrängungselemente angeordnet. Die Feldverdrängungselemente sind elektrisch leitfähig und innerhalb des Sicherheitsdokumentes elektrisch isoliert. Sie weisen eine hohe Dielektrizitätskonstante auf. Sie sind bevorzugt in unmittelbarer Nähe zu den zinksulfidischen Leuchtstoffteilchen angeordnet. Die Feldverdrängungselemente bestehen bevorzugt aus metallischen Partikeln, wie Eisen (Fe), Kupfer (Cu), Aluminium (Al) und/oder Silber (Ag) oder aber auch transparenten, optisch variablen Mehrschicht-Effektpigmenten. Die Feldverdrängungselemente dienen der Erhöhung der an dem zinksulfidischen Leuchtstoff wirksamen lokalen Feldstärke des elektrischen Feldes.

Einen weiteren Gegenstand der Erfindung bildet ein Verfahren zur Detektion und/oder Verifikation eines einen Leuchtstoff umfassenden Sicherheitsmerkmals in einem Sicherheits- oder Wertdokument. Bevorzugt dient das Verfahren zur Detektion und/oder Verifikation des erfindungsgemäßen Leuchtstoffs bzw. eines damit gebildeten Sicherheitsmerkmals in dem jeweiligen Sicherheitsdokument.

In einem Schritt dieses Verfahrens erfolgt ein Anregen des Leuchtstoffes durch ein elektrisches Feld. Der Leuchtstoff wird somit als ein Elektroluminophor angeregt. Entsprechend wird geprüft, ob eine Elektrolumineszenz im blauen und/oder grünen Bereich des Lichtspektrums empfangen werden kann, welche vom Leuchtstoff infolge der Anregung durch das elektrische Feld emittiert wird. Bevorzugt erfolgt das Anregen durch ein hochfrequentes Hochspannungsfeld, welches auf den Leuchtstoff ausgerichtet wird, um eine sichere stationäre und vorteilhafterweise auch eine Hochgeschwindigkeitsdetektion der empfangbaren Lumineszenzsignale zu ermöglichen.

In einem anderen Schritt des erfindungsgemäßen Verfahrens erfolgt ein Anregen des Leuchtstoffes durch Bestrahlen des Leuchtstoffes mit einer UV-Strahlung im Wellenlängenbereich zwischen 345 nm und 370 nm. Entsprechend wird geprüft, ob eine Photolumineszenz im blauen Bereich des Lichtspektrums empfangen werden kann, welche vom Leuchtstoff infolge der Anregung durch die UV-Strahlung im Wellenlängenbereich zwischen 345 nm und 370 nm emittiert wird.

In einem nochmals anderen Schritt erfolgt ein Anregen des Leuchtstoffes durch Bestrahlen des Leuchtstoffes mit einer UV-Strahlung im Wellenlängenbereich zwischen 310 nm und 335 nm. Entsprechend wird geprüft, ob eine Photolumineszenz im grünen Bereich des Lichtspektrums empfangen werden kann, welche vom Leuchtstoff infolge der Anregung durch die UV-Strahlung im Wellenlängenbereich zwischen 310 nm und 335 nm emittiert wird.

Wenn durch das Verfahren ein erfindungsgemäßer Leuchtstoff bzw. eine entsprechendes Sicherheitsmerkmal mit hoher Prüfsicherheit (verbessert als Level-3) geprüft werden soll, werden alle drei auftretenden Emission geprüft und verifiziert. Insbesondere wird also zusätzlich zur Elektrolumineszenz des erfindungsgemäßen Leuchtstoffes geprüft, ob ein von der Elektrolumineszenz unabhängiger Farbwechsel der mit kürzer- oder längerwelliger UV-Strahlung angeregten Photolumineszenz detektiert werden kann. Die dargestellten Anregungen und Detektionen können gleichzeitig, aufeinanderfolgend oder alternativ zueinander erfolgen.

In einer abgewandelten Ausführungsform wird auf die Anregung des Level-3-Merkmals Elektrolumineszenz verzichtet und nur das auf dem Farbshift der bei wechselnden UV-Anregungswellenlängen resultierenden Photolumineszenz-Emissionen basierende Level-2-Merkmal detektiert. Auch in diesem Fall kann die Anregung und Detektion zeitlich und räumlich getrennt erfolgen oder zeitgleich in einer kompakten Apparatur.

Das Sicherheitsdokument wird bevorzugt detektiert und/oder verifiziert, wenn die Elektrolumineszenz im blauen und/oder grünen Bereich des Lichtspektrums, die Photolumineszenz im blauen Bereich des Lichtspektrums und die Photolumineszenz im grünen Bereich des Lichtspektrums empfangen wurden. Dies setzt weiterhin voraus, dass die Photolumineszenz im blauen Bereich des Lichtspektrums ausschließlich während der Anregung des Leuchtstoffes durch die UV-Strahlung im Wellenlängenbereich zwischen 345 nm und 370 nm empfangen wurde, und dass die Photolumineszenz im grünen Bereich des Lichtspektrums ausschließlich während der Anregung des Leuchtstoffes durch die UV-Strahlung im Wellenlängenbereich zwischen 310 nm und 335 nm empfangen wurde.

Weitere Details und Vorteile der Erfindung werden im Folgenden anhand von Ausführungsbeispielen und der Zeichnung beschrieben. Es zeigen:
- Fig. 1:: Emissionsspektren einer ersten allgemeinen Ausführungsform des erfindungsgemäßen Leuchtstoffes;
- Fig. 2:: Emissionsspektren einer zweiten allgemeinen Ausführungsform des erfindungsgemäßen Leuchtstoffes;
- Fig. 3:: Emissionsspektren einer ersten bevorzugten Ausführungsform des erfindungsgemäßen Leuchtstoffes;
- Fig. 4:: Emissionsspektren einer zweiten bevorzugten Ausführungsform des erfindungsgemäßen Leuchtstoffes;
- Fig. 5:: Emissionsspektren einer dritten bevorzugten Ausführungsform des erfindungsgemäßen Leuchtstoffes;
- Fig. 6:: Emissionsspektren einer vierten bevorzugten Ausführungsform des erfindungsgemäßen Leuchtstoffes;
- Fig. 7:: Emissionsspektren einer fünften bevorzugten Ausführungsform des erfindungsgemäßen Leuchtstoffes; und
- Fig. 8:: Emissionsspektren einer sechsten bevorzugten Ausführungsform des erfindungsgemäßen Leuchtstoffes.

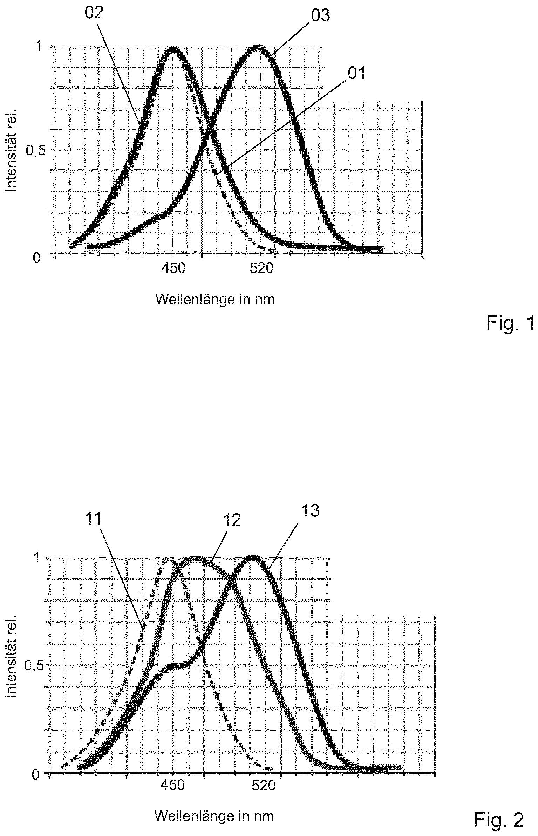

Aus der Fig. 1 geht hervor, dass im Falle der hier gewählten Leuchtstoffzusammensetzung und in Anwendung gebrachten Herstellungsbedingungen für die Elektrolumineszenz 01 einer ersten allgemeinen Ausführungsform des erfinderischen Leuchtstoffes und für die bei 365 nm angeregte Photolumineszenz 02 nahezu identische Emissionsspektren ermittelt wurden. Der Leuchtstoff emittiert sowohl bei EL- als auch bei UV-A-Anregung breitbandig im blauen Spektralbereich mit einer Maximumswellenlänge λₘₐₓ von etwa 450 nm. Wird der Leuchtstoff dagegen im UV-B-Bereich bei einer Anregungswellenlänge von 313 nm angeregt, so resultiert eine deutlich langwellig verschobene breitbandig grüne Emission 03 mit einem Maximum von etwa 520 nm. Die Photolumineszenz 02, 03 weist also einen beträchtlichen Farbshift auf, der bei Zugrundelegung des Abstandes der Maximumswellenlängen ungefähr 70 nm beträgt.

In Fig. 2 sind entsprechende Emissionsspektren 11, 12, 13 für eine weitere beispielhafte allgemeine Ausführungsform des erfinderischen Leuchtstoffes dargestellt. Auch in diesem Fall wird ein deutlicher Farbshift zwischen der UV-A-angeregten Photolumineszenz 12 und der UV-B-angeregten Photolumineszenz 13 des erfindungsgemäßen Elektroluminophors festgestellt, für den sich in Anwendung der beschriebenen Kriterien ein Wert von etwa 50 nm ergibt. Andererseits ist zu bemerken, dass bei der hier ausgewählten Ausführungsform des erfinderischen Leuchtstoffes auch zwischen dem Emissionsspektrum 11 für die Elektrolumineszenz und dem Emissionsspektrum 12 bei 365 nm-Anregung eine spektrale Verschiebung zu größeren Wellenlängen registriert wird.

Der erfindungsgemäße zinksulfidische Elektroluminophor kann ebenso wie die aus dem Stand der Technik bekannten elektrolumineszierenden EL-Pigmente und in vorteilhafter Weise anstelle dieser zum Zwecke des Fälschungsschutzes als Sicherheitsmerkmale in Sicherheits- und Wertdokumenten wie Banknoten, Reisepässen, Personalausweisen, Führerscheinen, Identitätskarten, Zutrittskontrollausweisen, Krankenkassenkarten, Postwertzeichen, Bankkarten, Kreditkarten, Smartcards, Tickets oder Etiketten eingesetzt werden. Der Leuchtstoff wird dazu mit Hilfe üblicher Drucktechnologien wie beispielsweise Flexo-, Offset-, Tief- oder Siebdruckverfahren auf oder in die Matrix der für die jeweiligen Sicherheitsdokumente verwendeten Materialien appliziert. Zur Erhöhung der Intensität seiner Elektrolumineszenz kann auch der erfindungsgemäße EL-Leuchtstoff mit den beschriebenen Feldverdrängungselementen vermischt werden. Die Auswahl des anzuwendenden Druckverfahrens ist dann u. a. von der eingestellten Korngrößenverteilung des erfinderischen Elektroluminophors und von der der zugesetzten Feldverdrängungselemente abhängig.

Die Kenntlichmachung der Level-3-Charakteristik des auf dem erfindungsgemäßen Leuchtstoff beruhenden Sicherheitsmerkmals gelingt durch die Anregung der Leuchtstoffteilchen mit hochfrequenten Hochspannungswechselfeldern.

Allerdings besteht der entscheidende Vorteil des erfindungsgemäßen Leuchtstoffes und des darauf beruhenden erfindungsgemäßen Sicherheitsmerkmals darin, dass sie neben der speziellen Elektrolumineszenzcharakteristik zumindest eine weitere exklusive Leuchtstoffeigenschaft mit Level-2-Status aufweisen, die zusätzlich oder alternativ zum Elektrolumineszenzphänomen zur Echtheitsverifizierung entsprechender Sicherheits- oder Wertdokumente herangezogen werden kann. Diese betrifft den beschriebenen charakteristischen Farbwechsel der Photolumineszenz des erfinderischen Leuchtstoffes bei Variation der UV-Anregungsbedingungen.

Werden, wie in bevorzugten Ausführungsformen des erfindungsgemäßen Leuchtstoffes, des erfindungsgemäßen Sicherheitsmerkmals bzw. des entsprechenden Sicherheits- und Wertdokumentes zur Erhöhung der wirksamen lokalen Stärke des anregenden elektrischen Feldes und somit der Signalstärke der resultierenden Elektrolumineszenz des Merkmals zusätzlich zu den EL-Leuchtstoffen sogenannte Feldverdrängungselemente in Form von elektrisch leitfähigen, optisch variablen Effektpigmenten eingesetzt, so kann das Merkmal neben dem Level 3- und dem Level 2 - Status auch eine entsprechende Level 1-Charakteristik aufweisen. Der optische Effekt dieser Pigmente, der in einem für den Betrachter wahrnehmbaren Farbwechsel unter verschiedenen Beleuchtungs- und Betrachtungswinkeln besteht, kann als ein zusätzliches Merkmal bei der Echtheitsverifikation herangezogen werden.

Die beschriebenen Besonderheiten des erfindungsgemäßen Leuchtstoffes ermöglichen also die Generierung von lumineszierenden Sicherheitsmerkmalen, die alle klassifizierten, unterschiedlichen Sicherheitsniveaus zuzuordnende Echtheitscharakteristika aufweisen. Dadurch können sowohl die Exklusivität der entsprechenden Merkmale als auch die Möglichkeiten für einen aufwandsoptimierten Echtheitsnachweis erhöht werden.

Die für den erfindungsgemäßen Leuchtstoff charakteristischen deutlichen Verschiebungen der bei Anregung mit UV-A- bzw. UV-B-Strahlen im sichtbaren Spektralbereich resultierenden Emissionen können leicht und sicher detektiert werden. Dazu nutzt der Fachmann das vorhandene Wissen der optischen Spektroskopie.

So kann die Anregung des erfindungsgemäßen Leuchtstoffes mit UV-Strahlung unterschiedlicher Wellenlängenbereiche beispielsweise unter Zuhilfenahme geeigneter UV-LED, die stationär oder gepulst betrieben werden können, oder aber unter Verwendung UV-emittierender Leuchtstofflampen, vorzugsweise unter Verwendung entsprechender Lampen vom CCFL-Typ realisiert werden. Die Detektion der bei unterschiedlichen Anregungsbedingungen resultierenden Lumineszenzstrahlung kann beispielsweise mit Hilfe geeigneter Kameras, mit Hilfe von Fotodioden, die ggf. mit optischen Farbfiltern kombiniert werden können, oder aber mit Hilfe von CCD-Zeilen oder geeigneten Spektrometern erfolgen.

Die erfindungsgemäße Synthese des erfindungsgemäßen Leuchtstoffes ist nachfolgend anhand von Beispielen dargestellt.

### Beispiel 1:

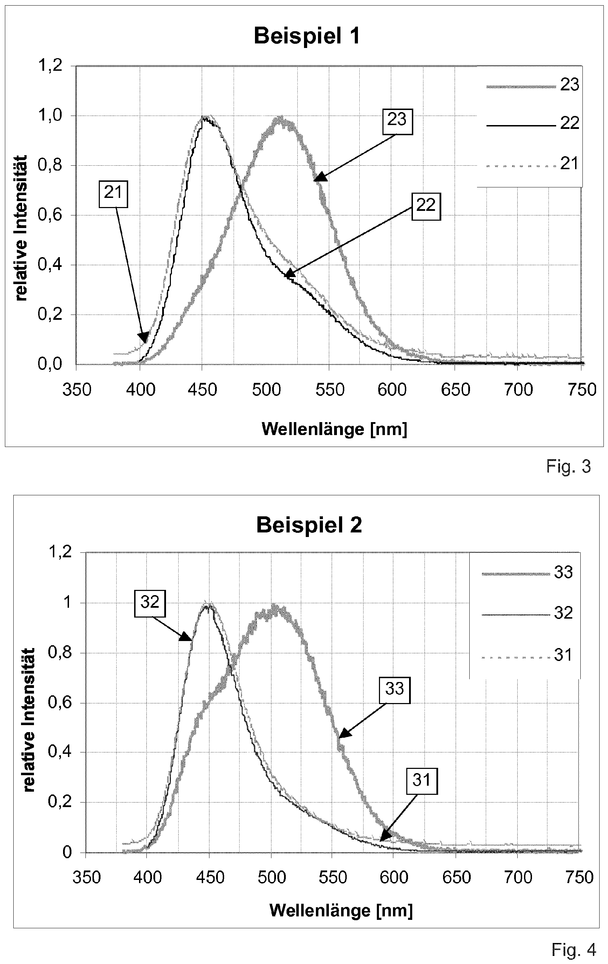

Es werden 1.742,6 g ZnS, 2,3948 g CuSO₄*5H₂O, 4,352 g BiI₃, 2,614g AlF₃ und 52,275 g S intensiv vermengt. Hierfür eignen sich alle bekannten Mischerformen wie V-Mischer, Taumelmischer oder Kugeltopfmischer. Das Gemenge wird in Quarzgutschalen gefüllt und mit einer Graphitschale, in der sich 1,74 g Aktivkohle befinden, bedeckt; die Glühschale wird mit einem Quarzgutdeckel abgeschlossen. In einem Kammerofen findet unter einer 5%H₂/95%N₂-Atmosphäre bei 1.000°C innerhalb von 3 h die Umsetzung statt. Nach mehrfacher Wäsche mit heißem Wasser und Desagglomerieren unter Einsatz von Keramikkugeln und unter Zusatz des Mahlhilfsmittels Cholinbase wird das Material mehrere Stunden mit 32%iger Salzsäure behandelt. Der erneut gewaschene Leuchtstoff wird mit 0,1 g Cu je kg Leuchtstoff nachdotiert und nach Trocknung für 2 h bei ca. 500°C getempert. Abschließend erfolgen eine Behandlung mit einer 1:10 verdünnten Salpetersäure, die erneute Wäsche mit Wasser, Trocknung, Temperung bei 300°C und die Abschlusssiebung. Das resultierende Beispiel des erfindungsgemäßen zinksulfidischen Leuchtstoffes weist die mit einem üblichen Messverfahren ermittelbare chemische Formel ZnS:Cu_{0,00069}Al_{0,00174}Bi_{0,00041}I_{0,00124}F_{0,00522} auf. Fig. 3 zeigt Emissionsspektren dieses Beispiels des erfindungsgemäßen Leuchtstoffes, nämlich ein Emissionsspektrum 21 der Elektrolumineszenz, ein Emissionsspektrum 22 der UV-A-angeregten Photolumineszenz und ein Emissionsspektrum 23 der UV-B-angeregten Photolumineszenz.

### Beispiel 2:

Es werden 11.592 g ZnS, 33,526 g CuSO₄*5H₂O, 4,032 g BiI₃, 36,596 g AlF₃ und 365,925g S wie im Beispiel 1 intensiv vermengt. Jeweils 1/6 des Gemenges wird in jeweils eine Quarzgutschalen gefüllt und mit einer Graphitschale, die 12 g Aktivkohle je Kilogramm Leuchtstoff enthält, bedeckt; die Glühschale wird mit einem Quarzgutdeckel abgeschlossen. In einem Durchschubofen findet unter einer 5%H₂/95%N₂-Atmosphäre bei 850°C bis 1.000°C innerhalb von 3 h die Umsetzung statt. Nach mehrfacher Wäsche mit heißem Wasser und Desagglomerieren unter Einsatz von Keramikkugeln und unter Zusatz einer Kaliwasserglaslösung als Mahlhilfsmittel wird das Material mehrere Stunden mit 32%iger Salzsäure behandelt. Der erneut gewaschene Leuchtstoff wird mit 0,15 g Cu je kg Leuchtstoff nachdotiert und nach Trocknung für 2 h bei ca. 500°C getempert. Abschließend erfolgen eine Behandlung mit einer 1:10 verdünnten Salpetersäure, die erneute Wäsche mit Wasser, Trocknung, Temperung bei 300°C und die Abschlusssiebung. Das resultierende Beispiel des erfindungsgemäßen zinksulfidischen Leuchtstoffes weist die mit einem üblichen Messverfahren ermittelbare chemische Formel ZnS:Cu_{0,00128}Al_{0,00366}Bi_{0,000058}I_{0,00017}F_{0,01099} auf. Fig. 4 zeigt Emissionsspektren dieses Beispiels des erfindungsgemäßen Leuchtstoffes, nämlich ein Emissionsspektrum 31 der Elektrolumineszenz, ein Emissionsspektrum 32 der UV-A-angeregten Photolumineszenz und ein Emissionsspektrum 33 der UV-B-angeregten Photolumineszenz.

### Beispiel 3:

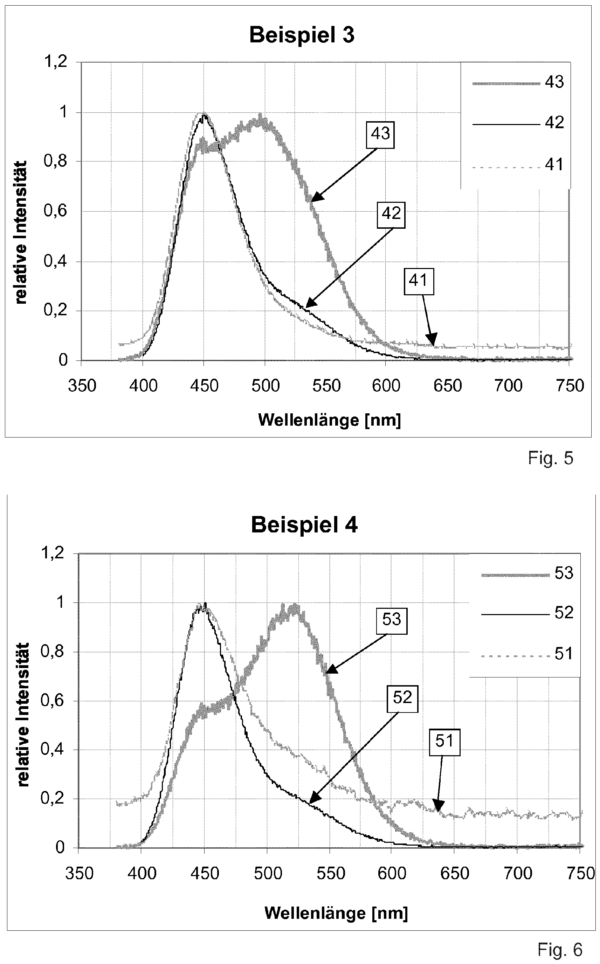

Es werden 11.592 g ZnS, 33,526 g CuSO₄*5H₂O, 4,269 g BiI₃, 6,2 g AlCl₃, 69,552 g MgAl₂O₄, 10 g BaI₂, 30 g NaI, 30 g NH₄Br und 365,925 g S wie im Beispiel 1 intensiv vermengt, wobei auf weitgehenden Ausschluss von Feuchtigkeit zu achten ist. Jeweils 1/6 des Gemenges wird in jeweils eine Quarzgutschalen gefüllt und mit einer Graphitschale, die 12 g Aktivkohle je Kilogramm Leuchtstoff enthält, bedeckt; die Glühschale wird mit einem Quarzgutdeckel abgeschlossen. In einem Durchschubofen findet unter einer 1,5%H2/98,5%N2-Atmosphäre bei 850°C bis 1.100°C innerhalb von 3 h die Umsetzung statt. Nach mehrfacher Wäsche mit heißem Wasser und Desagglomerieren unter Einsatz von Keramikkugeln und unter Zusatz einer Pyrophosphatlösung als Mahlhilfsmittel wird das Material mehrere Stunden mit 32%iger Salzsäure behandelt. Der erneut gewaschene Leuchtstoff wird mit 0,1 g Cu je kg Leuchtstoff nachdotiert und nach Trocknung für 2 h bei ca. 500°C getempert. Abschließend erfolgen eine Behandlung mit einer 1:10 verdünnten Salpetersäure, die erneute Wäsche mit Wasser, Trocknung, Temperung bei 300°C und die Abschlusssiebung. Das resultierende Beispiel des erfindungsgemäßen zinksulfidischen Leuchtstoffes weist die mit einem üblichen Messverfahren ermittelbare chemische Formel ZnS:Cu_{0,00127}Al_{0,0086}Bi_{0,00006}I_{0,0029}Cl_{0,00177}Br_{0,00257} auf. Fig. 5 zeigt Emissionsspektren dieses Beispiels des erfindungsgemäßen Leuchtstoffes, nämlich ein Emissionsspektrum 41 der Elektrolumineszenz, ein Emissionsspektrum 42 der UV-A-angeregten Photolumineszenz und ein Emissionsspektrum 43 der UV-B-angeregten Photolumineszenz.

### Beispiel 4:

Es werden 3.325,13 g ZnS, 9,1456 g CuSO₄*5H₂O, 6.62 g AgNO₃, 8,704 g InBr₃, 10,455 g AlF₃ und 104,55 g S wie im Beispiel 1 intensiv vermengt. Jeweils 1/2 des Gemenges wird in jeweils eine Quarzgutschalen gefüllt; auf das Gemenge wird ein Aluminiumoxidschiffchen mit 18 g Aktivkohle je Kilogramm Leuchtstoff gestellt. Die Glühschale wird mit einem Quarzgutdeckel abgeschlossen. In einem Durchschubofen findet unter einer 1,5%H2/98,5%N₂-Atmosphäre bei 1.150°C innerhalb von 3 h die Umsetzung statt. Nach mehrfacher Wäsche mit heißem Wasser und Desagglomerieren unter Einsatz von Keramikkugeln und unter Zusatz einer Pyrophosphatlösung als Mahlhilfsmittel wird das Material mehrere Stunden mit 32%iger Salzsäure behandelt. Der erneut gewaschene Leuchtstoff wird mit 0,1 g Cu je kg Leuchtstoff nachdotiert und nach Trocknung für 2 h bei ca. 500°C getempert. Abschließend erfolgen eine Behandlung mit einer 1:10 verdünnten Salpetersäure, die erneute Wäsche mit Wasser, Trocknung, Temperung bei 300°C und die Abschlusssiebung. Das resultierende Beispiel des erfindungsgemäßen zinksulfidischen Leuchtstoffes weist die mit einem üblichen Messverfahren ermittelbare chemische Formel ZnS : Cu_{0,00122}Ag_{0,00144}Al_{0,00364}In_{10,00072}Br_{0,00216}F_{0,0109} auf. Fig. 6 zeigt Emissionsspektren dieses Beispiels des erfindungsgemäßen Leuchtstoffes, nämlich ein Emissionsspektrum 51 der Elektrolumineszenz, ein Emissionsspektrum 52 der UV-A-angeregten Photolumineszenz und ein Emissionsspektrum 53 der UV-B-angeregten Photolumineszenz.

### Beispiel 5:

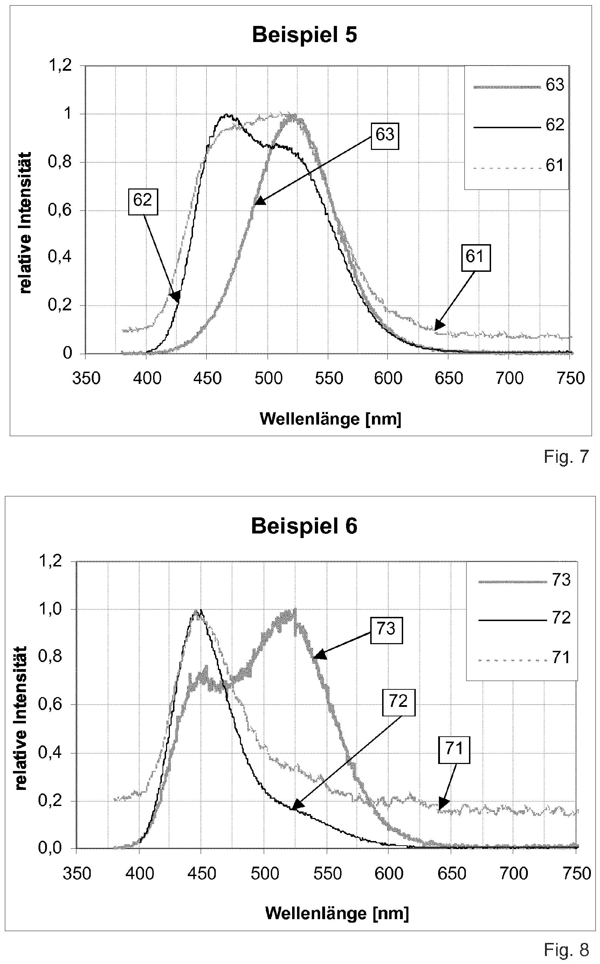

Es werden 3.325, 13 g ZnS, 9,1456 g CuSO₄*5H₂O, 8,704 g BiI₃, 10,455 g AlF₃ und 104,55 g S wie in Beispiel 1 intensiv vermengt. Das Gemenge wird in Quarzgutschalen gefüllt und mit einer Graphitschale, in der sich 22 g Aktivkohle je Kilogramm Leuchtstoff befinden, bedeckt; die Glühschale wird mit einem Quarzgutdeckel abgeschlossen. In einem Durchschubofen findet unter Luft bei 1.000°C bis 1.100°C innerhalb von 3 h die Umsetzung statt. Nach mehrfacher Wäsche mit heißem Wasser und Desagglomerieren unter Einsatz von Keramikkugeln und unter Zusatz des Mahlhilfsmittels Cholinbase wird erneut gewaschen. Nach dem Trocknen erfolgt die Abschlusssiebung. Es erfolgt keine Nachdotierung von Cu. Das resultierende Beispiel des erfindungsgemäßen zinksulfidischen Leuchtstoffes weist die mit einem üblichen Messverfahren ermittelbare chemische Formel ZnS:Cu_{0,00122}Al_{0,003649}Bi_{0,00043}I_{0,00129}F_{0,0109} auf. Fig. 7 zeigt Emissionsspektren dieses Beispiels des erfindungsgemäßen Leuchtstoffes, nämlich ein Emissionsspektrum 61 der Elektrolumineszenz, ein Emissionsspektrum 62 der UV-A-angeregten Photolumineszenz und ein Emissionsspektrum 63 der UV-B-angeregten Photolumineszenz.

### Beispiel 6:

Es werden 3.325,13 g ZnS, 8,5 g CuSO₄*5H₂O, 2,1 g Na₃[AuCl₄], 6, 225g NaBr, 8, 704 g BaI₂, 1,98 g GaF₃, 8,55 g AlF₃ und 104,55 g S wie in Beispiel 1 intensiv vermengt. Das Gemenge wird in Quarzgutschalen gefüllt und mit einer Graphitschale bedeckt; die Glühschale wird mit einem Quarzgutdeckel abgeschlossen. In einem Durchschubofen findet unter einer 5%H₂/95%N₂-Atmosphäre bei 1.000°C innerhalb von 3 h die Umsetzung statt. Nach mehrfacher Wäsche mit heißem Wasser und Desagglomerieren unter Einsatz von Keramikkugeln und unter Zusatz des Mahlhilfsmittels Cholinbase wird das Material mehrere Stunden mit 32%iger Salzsäure behandelt. Der erneut gewaschene Leuchtstoff wird mit 0,1 g Cu je kg Leuchtstoff nachdotiert und nach Trocknung für 2 h bei ca. 500°C getempert. Abschließend erfolgen eine Behandlung mit einer 1:10 verdünnten Salpetersäure, die erneute Wäsche mit Wasser, Trocknung, Temperung bei 300 °C und die Abschlusssiebung. Das resultierende Beispiel des erfindungsgemäßen zinksulfidischen Leuchtstoffes weist die mit einem üblichen Messverfahren ermittelbare chemische Formel ZnS:Cu_{0,00115}Au_{0,00015}Al_{0,00298}Ga_{0,000458}I_{0,0013}F_{0,00895}Br_{0,00177} auf. Fig. 8 zeigt Emissionsspektren dieses Beispiels des erfindungsgemäßen Leuchtstoffes, nämlich ein Emissionsspektrum 71 der Elektrolumineszenz, ein Emissionsspektrum 72 der UV-A-angeregten Photolumineszenz und ein Emissionsspektrum 73 der UV-B-angeregten Photolumineszenz.

### Bezugszeichenliste

- 01: - Emissionsspektrum der Elektrolumineszenz
- 02: - Emissionsspektrum der Photolumineszenz bei UV-A-Anregung
- 03: - Emissionsspektrum der Photolumineszenz bei UV-B-Anregung

- 11: - Emissionsspektrum der Elektrolumineszenz
- 12: - Emissionsspektrum der Photolumineszenz bei UV-A-Anregung
- 13: - Emissionsspektrum der Photolumineszenz bei UV-B-Anregung

- 21: - Emissionsspektrum der Elektrolumineszenz
- 22: - Emissionsspektrum der Photolumineszenz bei UV-A-Anregung
- 23: - Emissionsspektrum der Photolumineszenz bei UV-B-Anregung

- 31: - Emissionsspektrum der Elektrolumineszenz
- 32: - Emissionsspektrum der Photolumineszenz bei UV-A-Anregung
- 33: - Emissionsspektrum der Photolumineszenz bei UV-B-Anregung

- 41: - Emissionsspektrum der Elektrolumineszenz
- 42: - Emissionsspektrum der Photolumineszenz bei UV-A-Anregung
- 43: - Emissionsspektrum der Photolumineszenz bei UV-B-Anregung

- 51: - Emissionsspektrum der Elektrolumineszenz
- 52: - Emissionsspektrum der Photolumineszenz bei UV-A-Anregung
- 53: - Emissionsspektrum der Photolumineszenz bei UV-B-Anregung

- 61: - Emissionsspektrum der Elektrolumineszenz
- 62: - Emissionsspektrum der Photolumineszenz bei UV-A-Anregung
- 63: - Emissionsspektrum der Photolumineszenz bei UV-B-Anregung

- 71: - Emissionsspektrum der Elektrolumineszenz
- 72: - Emissionsspektrum der Photolumineszenz bei UV-A-Anregung
- 73: - Emissionsspektrum der Photolumineszenz bei UV-B-Anregung

## Patentansprüche

1. Zinksulfidischer Leuchtstoff, welcher bei Anregung durch ein elektrisches Feld im blauen Bereich des Lichtspektrums emittiert und bei Anregung durch UV-Strahlung im Wellenlängenbereich zwischen 345 nm und 370 nm im blauen Bereich des Lichtspektrums emittiert und bei Anregung durch UV-Strahlung im Wellenlängenbereich zwischen 310 nm und 335 nm im grünen Bereich des Lichtspektrums emittiert; wobei sich die Emission bei Anregung durch UV-Strahlung im Wellenlängenbereich zwischen 345 nm und 370 nm von der Emission bei Anregung durch UV-Strahlung im Wellenlängenbereich zwischen 310 nm und 335 nm unterscheidet; und wobei der Leuchtstoff folgende allgemeine chemische Formel aufweist:
ZnS:Aₐ,M_{b},X_{c}
mit:
• A = Cu, wobei Cu anteilig durch Ag und/oder Au ersetzt sein kann;
• M = Al, wobei Al anteilig durch Bi, Ga und/oder In ersetzt sein kann;
• X = ein oder mehrere Halogenide, ausgewählt aus der die Elemente F, Cl, Br und I umfassenden Gruppe;
• 0 < (a + b + c) < 0, 12;
• 0,0001 < a < 0,008;
• 0,6 · a < b < 4 · a und
• 2 · b < c < 4 · b;
wobei Cu einen Aktivator bildet; wobei M und X Koaktivatoren bilden; und wobei durch Cu sowie durch M und X zwei unterschiedliche, aktivierbare Strahlungszentren im zinksulfidischen Leuchtstoff bedingt sind.

2. Zinksulfidischer Leuchtstoff nach Anspruch 1, **dadurch gekennzeichnet, dass** er eine der folgenden chemischen Formeln aufweist:
- ZnS:Cu_{0,00069}Al_{0,00174}Bi_{0,00041}I_{0,00124}F_{0,00522};
- ZnS:CU_{0,00128}Al_{0,00366}Bi_{0,000058}I_{0,00017}F_{0,01099};
- ZnS:Cu_{0,00127}Al_{0,0086}Bi_{0,00006}I_{0,00229}Cl_{0,00177}Br_{0,00257};
- ZnS:Cu_{0,00122}Ag_{0,00144}Al_{0,00364}In_{0,00072}Br_{0,00216}F_{0,0109};
- ZnS:Cu_{0,00122}Al_{0,003649}Bi_{0,00043}I_{0,00129}F_{0,0109};
- ZnS:Cu_{0,001151}Au_{0,000151}Al_{0,00298}Ga_{0,000458}I_{0,0013}F_{0,00895}Br_{0,00177}.

3. Zinksulfidischer Leuchtstoff nach Anspruch 1 oder 2, **dadurch gekennzeichnet, dass** er pulverförmig ausgebildet ist und eine mittlere Korngröße zwischen 2 µm und 20 µm aufweist.

4. Verfahren zur Herstellung eines zinksulfidischen Leuchtstoffes gemäß einem der Ansprüche 1 bis 3, folgende Schritte umfassend:
- Herstellen einer Mischung, die mindestens besteht aus:
• ZnS;
• einer Cu enthaltenden Verbindung;
• einer ein Halogen X enthaltenden Verbindung, wobei X aus der die Elemente F, Cl Br und I umfassenden Gruppe ausgewählt ist;
• einer Al enthaltenden Verbindung;
• elementarem Schwefel;
- Glühen der Mischung auf eine Temperatur zwischen 800°C und 1.300°C, wodurch die Mischung zu dem zinksulfidischen Leuchtstoff reagiert, wobei das Glühen der Mischung in Anwesenheit von Aktivkohle und/oder einer Graphitschale erfolgt, und wobei das Glühen der Mischung unter Luft oder unter einer N₂/H₂-Atmosphäre mit einem Wasserstoffanteil zwischen 1 % und 6 % erfolgt; und
- Abkühlen der geglühten Mischung;
- Waschen sowie ggf. Vermahlen und Sieben des zinksulfidischen Leuchtstoffes;
wobei der abgekühlte zinksulfidische Leuchtstoff zunächst ein Zwischenprodukt darstellt und anschließend folgende weitere Schritte durchgeführt werden:
- Ätzen des Zwischenproduktes mit einer Mineralsäure;
- Nachdotieren des Zwischenproduktes mit Cu;
- Trocknen des nachdotierten Zwischenproduktes;
- Tempern des getrockneten Zwischenproduktes bei einer Temperatur zwischen 200°C und 600°C;
- Behandeln des getemperten Zwischenproduktes mit einer verdünnten Mineralsäure;
- Waschen und Trocknen des Zwischenproduktes; und
- Tempern des Zwischenproduktes bei einer Temperatur zwischen 200°C und 500°C, wodurch der zinksulfidische Leuchtstoff erhalten wird.

5. Zinksulfidischer Leuchtstoff, herstellbar durch ein Verfahren nach Anspruch 4.

6. Sicherheitsmerkmal, welches einen zinksulfidischen Leuchtstoff nach einem der Ansprüche 1 bis 3 umfasst.

7. Sicherheits- oder Wertdokument mit einem Sicherheitsmerkmal, welches einen zinksulfidischen Leuchtstoff nach einem der Ansprüche 1 bis 3 umfasst.

8. Verfahren zur Detektion und/oder Verifikation eines einen Leuchtstoff gemäß einem der Ansprüche 1 bis 3 umfassenden Sicherheitsmerkmals in einem Sicherheits- oder Wertdokument, folgende Schritte umfassend:
a. Anregen des Leuchtstoffes durch Bestrahlen des Leuchtstoffes mit einer UV-Strahlung im Wellenlängenbereich zwischen 345 nm und 370 nm;
b. Prüfen, ob eine Strahlung im blauen Bereich des Lichtspektrums empfangen wird, welche vom Leuchtstoff infolge der Anregung durch die UV-Strahlung im Wellenlängenbereich zwischen 345 nm und 370 nm emittiert wird;
c. Anregen des Leuchtstoffes durch Bestrahlen des Leuchtstoffes mit einer UV-Strahlung im Wellenlängenbereich zwischen 310 nm und 335 nm;
d. Prüfen, ob eine Strahlung im grünen Bereich des Lichtspektrums empfangen wird, welche vom Leuchtstoff infolge der Anregung durch die UV-Strahlung im Wellenlängenbereich zwischen 310 nm und 335 nm emittiert wird.

9. Verfahren nach Anspruch 8, **gekennzeichnet durch**:
e. Anregen des Leuchtstoffes durch ein elektrisches Feld;
f. Prüfen, ob infolge der Anregung durch das elektrische Feld eine Strahlung im blauen und/oder grünen Bereich des Lichtspektrums emittiert wird.

10. Verfahren nach Anspruch 8 oder 9, **dadurch gekennzeichnet, dass** jeweils ein Bestätigungssignal generiert wird, wenn in einem der ausgeführten Prüfschritte b., d. und/oder f. das Auftreten der geprüften Strahlung festgestellt wird.

11. Verfahren nach Anspruch 10, **dadurch gekennzeichnet, dass** eine Level-2-Bestätigungssignal ausgegeben wird, wenn in den Prüfschritten b. und d. das Auftreten der geprüften Strahlung festgestellt wird, und dass ein Level-3-Bestätigungssignal ausgegeben wird, wenn in den Prüfschritten b. und d. und f. das Auftreten der geprüften Strahlung festgestellt wird.

## Claims

1. Zinc sulphide phosphor, which, in the case of excitation by an electric field, emits in the blue region of the light spectrum, and in the case of excitation by UV radiation in the wavelength range between 345 nm and 370 nm, emits in the blue region of the light spectrum, and, in the case of excitation by UV radiation in the wavelength range between 310 nm and 335 nm, emits in the green region of the light spectrum; wherein the emission in the case of excitation by UV radiation in the wavelength range between 345 nm and 370 nm differs from the emission in the case of excitation by UV radiation in the wavelength range between 310 nm and 335 nm; and wherein the phosphor has the following general chemical formula:
ZnS : Aₐ, M_{b}, X_{c}
where:
• A = Cu, where Cu can be replaced proportionally by Ag and/or Au;
• M = Al, where Al can be replaced proportionally by Bi, Ga and/or In;
• X = one or more halides, selected from the group comprising the elements F, Cl, Br and I;
▪ 0 < (a + b + c) < 0.12;
▪ 0.0001 < a < 0.008;
▪ 0.6 · a < b < 4 · a, and
▪ 2 · b < c < 4 · b,
wherein Cu forms an activator, wherein M and X form coactivators, and wherein, due to Cu and due to M and X, two different activatable radiation centres are induced in the zinc sulphide phosphor.

2. Zinc sulphide phosphor according to claim 1, **characterized in that** it has one of the following chemical formulas:
- ZnS:CU_{0.00069}Al_{0.0017}4Bi_{0.00041}I_{0.00124}F_{0.00522};
- ZnS:CU_{0.00128}Al_{0.00366}Bi_{0.000058}I_{0.00017}F_{0.01099};
- ZnS:CU_{0.00127}Al_{0.0086}Bi_{0.00006}I_{0.00229}Cl_{0.00177}Br_{0.00257};
- ZnS:CU_{0.00122}Ag_{0.00144}Al_{0.00364}In_{0.00072}Br_{0.00216}F_{0.0109};
- ZnS:CU₀.₀₀₁₂₂Al_{0.003649}Bi_{0.00043}I_{0.00129}F_{0.0109};
- ZnS:CU_{0.0011510}Au_{0.000151}Al_{0.00298}Ga_{0.000458}I_{0.0013}F_{0.00895}Br_{0.00177}.

3. Zinc sulphide phosphor according to claim 1 or 2, **characterized in that** it is in the form of a powder and has a mean grain size between 2 µm and 20 µm.

4. Process for producing a zinc sulphide phosphor according to one of claims 1 to 3, comprising the following steps of:
- producing a mixture which consists at least of:
• ZnS;
• a Cu-containing compound;
• a compound containing a halogen X, where X is selected from the group comprising the elements F, Cl, Br and I;
• an Al-containing compound;
• elemental sulphur;
- annealing the mixture to a temperature between 800°C and 1,300°C, as a result of which the mixture reacts to form the zinc sulphide phosphor, wherein the annealing of the mixture occurs in the presence of activated carbon and/or a graphite dish, and wherein the annealing of the mixture occurs in air or in an N₂/H₂ atmosphere with a hydrogen content between 1% and 6%; and
- cooling the annealed mixture;
- washing, as well as optionally grinding and sieving the zinc sulphide phosphor;
wherein the cooled zinc sulphide phosphor at first represents an intermediate product, and then the following steps are carried out:
- etching the intermediate product with a mineral acid;
- secondary doping of the intermediate product with Cu;
- drying the secondarily doped intermediate product;
- tempering the dried intermediate product at a temperature between 200°C and 600°C;
- treating the tempered intermediate product with a dilute mineral acid;
- washing and drying the intermediate product; and
- tempering the intermediate product at a temperature between 200°C and 500°C, as a result of which the zinc sulphide phosphor is obtained.

5. Zinc sulphide phosphor, producible by a process according to claim 4.

6. Security feature that comprises a zinc sulphide phosphor according to one of claims 1 to 3.

7. Security document or document of value with a security feature that comprises a zinc sulphide phosphor according to one of claims 1 to 3.

8. Method for detecting and/or verifying, in a security document or document of value, a security feature that comprises a phosphor according to one of claims 1 to 3, comprising the following steps:
a. exciting the phosphor by irradiation of the phosphor with UV radiation in the wavelength range between 345 nm and 370 nm;
b. testing whether radiation in the blue region of the light spectrum is received, which is emitted by the phosphor due to the excitation by the UV radiation in the wavelength range between 345 nm and 370 nm;
c. exciting the phosphor by irradiation of the phosphor with UV radiation in the wavelength range between 310 nm and 335 nm;
d. testing whether radiation in the green region of the light spectrum is received, which is emitted by the phosphor due to the excitation by the UV radiation in the wavelength range between 310 nm and 335 nm.

9. Method according to claim 8, **characterized in that**:
e. exciting the phosphor by an electric field;
f. testing whether, due to the excitation by the electric field, radiation in the blue and/or green region of the light spectrum is emitted.

10. Method according to claim 8 or 9, **characterized in that** a confirmation signal is generated if, in one of the listed testing steps b., d. and/or f., the occurrence of the tested radiation is detected.

11. Method according to claim 10, **characterized in that** a level 2 confirmation signal is issued, if, in testing steps b. and d., the occurrence of the tested radiation is detected, and **in that** a level 3 confirmation signal is issued, if, in testing steps b. and d. and f., the occurrence of the tested radiation is detected.

## Revendications

1. Produit luminescent au sulfure de zinc, lequel, lorsqu'il est excité par un champ électrique émet dans le spectre lumineux bleu et lorsqu'il est excité par un rayonnement UV dans la longueur d'ondes comprise entre 345 nm 370 nm, émet dans le spectre lumineux bleu et lorsqu'il est excité par un rayonnement UV dans la longueur d'ondes comprise entre 310 nm et 335 nm, émet dans le spectre lumineux vert ;
lors d'une excitation par rayonnement UV dans la longueur d'ondes comprise entre 345 nm 370 nm,
l'émission se différenciant de l'émission lors d'une excitation par UV dans la longueur d'ondes comprise entre 310 nm et 335 nm ; et le produit luminescent présentant la formule chimique générale suivante :
Zns : Aₐ, M_{b}, X_{c}ZnS:Aₐ,M_{b},X_{c}
avec :
• A = Cu, Cu pouvant être remplacé proportionnellement par Ag et/ou Au ;
• M = Al, Al pouvant être remplacé proportionnellement par Bi, Ga et/ou In ;
• X = un ou plusieurs halogénures, choisis dans le groupe comprenant les éléments F, Cl, Br et I ;
• 0 < (a + b + c) < 0, 12 ;
• 0,0001 < a < 0,008 ;
• 0,6 ·a < b < 4 · a et
• 2 · b < C < 4 · b ;
Cu représentant un activateur ; M et X représentant des coactivateurs et Cu ainsi que M et X conditionnant différents centres de rayonnement activables dans le produit luminescent au sulfure de zinc.

2. Produit luminescent au sulfure de zinc selon la revendication 1, **caractérisé en ce qu'**il présente l'une des formules chimiques suivantes :
- ZnS : Cu_{0,00069}Al_{0,00174}Bi_{0,00041}I_{0,00124}F_{0,00522} ;
- ZnS : Cu_{0,00128}Al_{0,00366}Bi_{0,000058}I_{0,00017}F_{0,0099} ;
- ZnS : Cu_{0,001127}Al_{0,0086}Bi_{0,00006},0₀₂₂₉Cl_{0,00177}Br_{0,00257} ;
- ZnS : Cu_{0,00122}Ag_{0,00144}Al_{0,00364}In_{0,00072}Br_{0,00216}F_{0,0109} ;
- ZnS : Cu_{0,00122}Al_{0,003649}Bi_{0,00043}I_{0,00129}F_{0,0109} ;
- ZnS : CU_{0,001151}Au_{0,000151}Al_{0,00298}Ga_{0,000458}I_{0,0013}F_{0,00895}Br_{0,00177}.

3. Produit luminescent au sulfure de zinc selon la revendication 1 ou 2, **caractérisé en ce qu'**il est conçu sous forme pulvérulente et présente une grosseur de grains moyenne comprise entre 2 µm et 20 µm.

4. Procédé destiné à fabriquer un produit luminescent au sulfure de zinc selon l'une quelconque des revendications 1 à 3, comprenant les étapes suivantes :
- de la fabrication d'un mélange, qui est composé au moins :
• de Zn ;
• d'un composé contenant du Cu ;
• d'un composé contenant un halogène X, sachant que X est choisi dans le groupe comprenant les éléments F, Cl Br et 1 ;
• d'un composé contenant de l'Al ;
• de soufre élémentaire ;
- de la calcination du mélange à une température comprise entre 800°C et 1.300°C, suite à quoi le mélange réagit pour obtenir le produit luminescent au sulfure de zinc, la calcination du mélange s'effectuant en présence de charbon actif et/ou d'une coque en graphite, et la calcination du mélange s'effectuant sous air ou sous une atmosphère de N₂/H₂ avec une part d'hydrogène comprise entre 1 % et 6 % ; et
- du refroidissement du mélange calciné ;
- du lavage, ainsi que le cas échéant du broyage et du tamisage du produit luminescent au sulfure de zinc ;
le produit luminescent au sulfure de zinc correspondant d'abord à un produit intermédiaire et les étapes supplémentaires suivantes étant réalisées par la suite :
- du mordançage du produit intermédiaire avec un acide minéral ;
- du post-dopage du produit intermédiaire avec du Cu ;
- du séchage du produit intermédiaire post-dopé ;
- de la trempe du produit intermédiaire séché à une température comprise entre 200°C et 600°C ;
- du traitement du produit intermédiaire trempé avec un acide minéral dilué ;
- du lavage et du séchage du produit intermédiaire ; et
- de la trempe du produit intermédiaire à une température comprise entre 200°C et 500°C, suite à quoi, on obtient le produit luminescent au sulfure de zinc.

5. Produit luminescent au sulfure de zinc, susceptible d'être fabriqué par un procédé selon la revendication 4.

6. Caractéristique de sécurité, laquelle comprend un produit luminescent au sulfure de zinc selon l'une quelconque des revendications 1 à 3.

7. Document de sécurité ou document de valeur, avec une caractéristique de sécurité, laquelle comprend un produit luminescent au sulfure de zinc selon l'une quelconque des revendications 1 à 3.

8. Procédé destiné à détecter et/ou à vérifier une caractéristique de sécurité comprenant un produit luminescent selon l'une quelconque des revendications 1 à 3 dans un document de sécurité ou document de valeur, comprenant les étapes suivantes :
a. de l'excitation du produit luminescent par exposition du produit luminescent à un rayonnement UV dans la gamme de longueurs d'ondes comprise entre 345 nm et 370 nm ;
b. de la vérification si un rayonnement dans le spectre lumineux bleu est réceptionné, lequel est émis par le produit luminescent suite à l'excitation par le rayonnement UV dans la gamme de longueurs d'ondes comprise entre 345 nm et 370 nm ;
c. de l'excitation du produit luminescent par exposition du produit luminescent à un rayonnement UV dans la gamme de longueurs d'ondes comprise entre 310 nm et 335 nm ;
d. de la vérification si un rayonnement dans le spectre lumineux vert est réceptionné, lequel est émis par le produit luminescent suite à l'excitation par le rayonnement UV dans la gamme de longueurs d'ondes comprise entre 310 nm et 335 nm.

9. Procédé selon la revendication 8, **caractérisé par** :
e. l'excitation du produit luminescent par un champ électrique ;
f. la vérification si, suite à l'excitation par le champ électrique, un rayonnement dans le spectre lumineux bleu et/ou vert est émis.

10. Procédé selon la revendication 8 ou 9, **caractérisé en ce qu'**il est généré chaque fois un signal de confirmation si lors de la réalisation d'une étape de vérification b., d. et/ou f. la production du rayonnement vérifié est constatée.

11. Procédé selon la revendication 10, **caractérisé en ce qu'**un signal de confirmation à deux niveaux est délivré si lors des étapes de vérification b. et d., la production du rayonnement vérifié est constatée, et **en ce qu'**un signal de confirmation à 3 niveaux est délivré si lors des étapes de vérification b. et d. et f., la production du rayonnement vérifié est constatée.
